# FASCICULE DE BREVET EUROPEEN

(11) **EP 2 315 223 B1**
(45) Date de publication et mention de la délivrance du brevet: **09.05.2012**
(21) Numéro de dépôt: 10188593.7
(22) Date de dépôt: 22.10.2010
(51) Int. Cl.: H01H 9/02

(54) **Protection annulaire souple d'une télécommande**
Flexible Schutzhülle für eine Fernbedienung
Flexible annular protection for a remote control

(30) Priorité: 22.10.2009 FR 0957430
(43) Date de publication de la demande: 27.04.2011
(73) Titulaire: Somfy SAS, 74300 Cluses (FR)
(72) Inventeur: Charleux, Olivier, 74200 Thonon les Bains (FR)
(74) Mandataire: Bugnion Genève

(56) Documents cités:
- EP-A1- 0 708 463
- WO-A1-2008/078087
- GB-A- 2 333 402
- US-A- 5 243 430

## Description

L'invention concerne le domaine de la commande à distance sans fil d'équipements domotiques assurant des fonctions de confort et/ou de sécurité dans un bâtiment. Ces équipements sont par exemple des protections solaires, des volets roulants, des fermetures, des luminaires, des moyens de chauffage ou climatisation, des dispositifs d'alarme anti-incendie ou anti-vol.

Pour offrir la possibilité de commander une pluralité d'équipements, d'activer des scénarios mais aussi d'enregistrer ceux-ci, le moyen de commande est en général un dispositif complexe. Il doit en général comprendre une interface homme-machine élaborée, du type clavier et écran, afin de sélectionner et d'enregistrer les liens avec différents équipements et, pour la création d'un scénario, de leur affecter et d'enregistrer une configuration choisie.

Par ailleurs, dans le but de créer des produits au design visuel attractif pour l'utilisateur, il est connu, notamment dans le domaine des télécommandes universelles pour téléviseurs et autres appareils électroniques, de simplifier la constitution de la télécommande en lui affectant un nombre limité de touches de commande.

Par exemple, le brevet US 5,243,430 décrit une télécommande universelle ne comprenant que quatre touches de commande, des émetteurs infrarouge pour émettre des signaux de commande de manière omnidirectionnelle et un récepteur infrarouge pour recevoir, dans un mode d'apprentissage, les codes émis par la télécommande d'origine.

De manière sensiblement similaire, la demande de brevet US2005/0174253 décrit une télécommande de forme discoïde représentant une face de « Smiley », équipée d'une seule touche de commande.

La demande de brevet US 2008/0172695 décrit également une télécommande discoïde de profil elliptique.

Tous ces dispositifs peuvent être programmés à partir de télécommandes existantes.

Il est également connu d'utiliser les facilités offertes par un ordinateur personnel pour servir de moyen de programmation. La demande de brevet WO 0039772 décrit en ce sens l'émulation d'une télécommande universelle sur un écran d'ordinateur. La télécommande réelle est raccordée à l'ordinateur et l'émission de commandes par la télécommande réelle survient lorsque la souris de l'ordinateur active les boutons de l'écran.

La connexion d'une télécommande nomade à un ordinateur peut être effectuée à l'aide d'un câble USB (Universal Bus Standard). Ces câbles existent en effet avec au moins un connecteur de petite dimension, apte à s'engager dans un appareil photographique, un téléphone ou un lecteur multimédia de type nomade. Ainsi, la télécommande peut être programmée à partir de l'ordinateur, ce qui est particulièrement utile si cette télécommande comprend un nombre limité de touches de commande.

Pour pouvoir utiliser ce connecteur, il est donc nécessaire de maintenir un accès par une ouverture dans le boîtier de la télécommande. De plus, pour des raisons esthétiques et de protection des lamelles de contact du connecteur, cette ouverture est en général masquée par une trappe amovible, par exemple montée pivotante, peu facile à manipuler et particulièrement fragile. La complexité de réalisation de celle-ci s'accroît dans le cas d'un boîtier aux formes arrondies.

L'invention résout ce problème, ainsi que d'autres problèmes décrits plus bas, par une télécommande nomade comprenant un anneau viscoélastique.

Selon l'invention, le dispositif de commande à distance d'équipements domotiques, de type nomade, comprend un boîtier dans lequel est logé un circuit électronique comprenant un transmetteur radiofréquences, ledit boîtier étant de forme sensiblement cylindrique ou sphérique et comprenant un axe de révolution, le dispositif comprenant un anneau viscoélastique, de même axe de révolution que celui dudit boîtier, maintenu élastiquement contre ledit boîtier et masquant une ouverture dudit boîtier.

Selon l'invention, ladite ouverture peut donner accès aux bornes d'un connecteur raccordé audit circuit électronique.

Selon l'invention, ledit boîtier peut comprendre une coque supérieure et une coque inférieure raccordées selon un plan de raccordement perpendiculaire à l'axe de révolution, et des touches de commande disposées sur ladite coque supérieure.

Selon l'invention, ledit anneau viscoélastique peut être maintenu dans une gorge de révolution dudit boîtier.

Selon l'invention, ledit anneau viscoélastique peut présenter une section comprenant une protubérance complémentaire de ladite gorge de révolution.

Selon l'invention, ladite gorge de révolution peut être située de part et d'autre dudit plan de raccordement.

Selon l'invention, le diamètre extérieur dudit anneau viscoélastique peut être supérieur au diamètre extérieur dudit boîtier.

Selon l'invention, ledit anneau viscoélastique peut présenter une section en forme de U recouvrant la zone de jonction entre ladite coque supérieure et ladite coque inférieure.

Selon l'invention, ledit circuit électronique peut comprendre une antenne imprimée et ledit anneau viscoélastique peut comprendre au moins une portion de spire conductrice, constituant une antenne secondaire et couplée magnétiquement avec ladite antenne imprimée.

L'invention sera mieux comprise par l'homme du métier grâce à la description détaillée de différents modes d'exécution en relation avec les dessins accompagnants, dans lesquels :
la figure 1 représente en vue de face une télécommande nomade selon l'invention,
la figure 2 représente la télécommande nomade selon un premier plan de coupe,
la figure 3 représente la télécommande nomade selon un deuxième plan de coupe,
la figure 4 représente partiellement en coupe une première variante de la télécommande nomade,
la figure 5 représente partiellement en coupe une deuxième variante de la télécommande nomade,
la figure 6 représente en vue de côté une télécommande nomade selon l'invention,
la figure 7 représente schématiquement une coupe partielle de la télécommande munie d'un anneau viscoélastique comprenant une antenne secondaire.

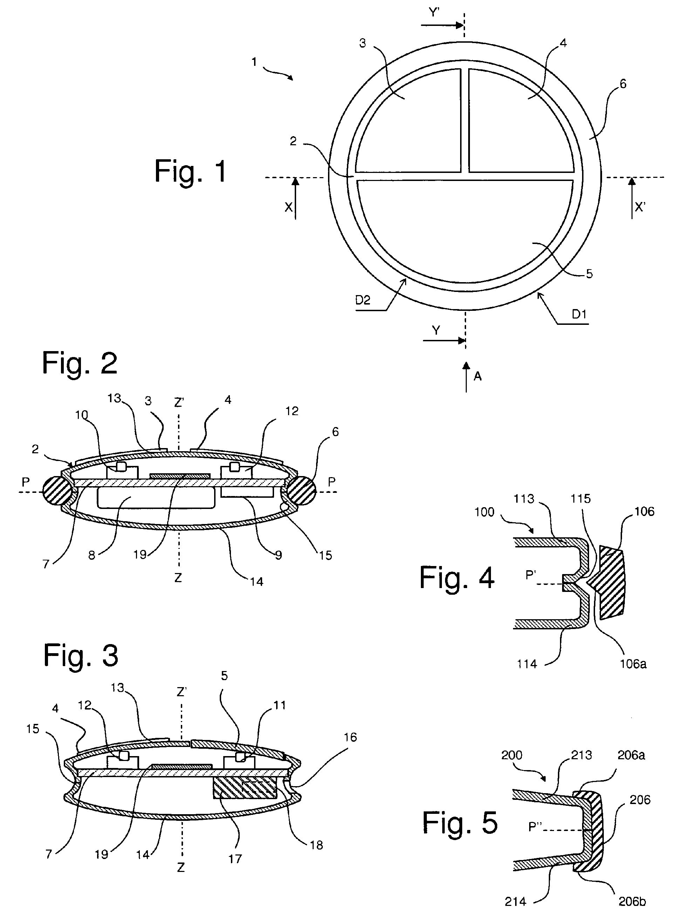

La figure 1 représente, en vue de face, une télécommande nomade 1 selon l'invention. La télécommande nomade est destinée à la commande d'équipements domotiques, par exemple des dispositifs d'éclairage, de fermeture ou de protection solaire. Elle comprend un boîtier 2, de forme sphérique aplatie, sur lequel sont disposées une première touche de commande 3, une deuxième touche de commande 4 et une troisième touche de commande 5. Les touches de commande sont agencées de manière non-symétrique de sorte à permettre une orientation facile du boîtier dans la main, par reconnaissance tactile. Ainsi, la troisième touche de commande occupe sensiblement un demi-disque alors que la première touche de commande et la deuxième touche de commande occupent chacune sensiblement un quart de disque.

Un anneau viscoélastique 6 entoure le boîtier 2. L'association d'un anneau circulaire et d'un boîtier à symétrie de révolution permet une mise en place facile de l'anneau sans le moindre problème d'indexation. Le diamètre extérieur D1 de l'anneau viscoélastique 6 est supérieur au diamètre extérieur D2 du boîtier 2. Le boîtier 2 est ainsi protégé contre tout choc latéral.

La figure 2 représente la télécommande nomade selon un premier plan de coupe XX' perpendiculaire au plan de la figure 1. Le boîtier 2 présente une symétrie de révolution autour d'un axe de révolution ZZ'. Il comprend une première coque supérieure 13 et une première coque inférieure 14 raccordées selon un plan de raccordement P perpendiculaire à l'axe de révolution. Les moyens de fixation des deux demi-coques entre elles ne sont pas représentés sur les différentes figures, mais peuvent être pris parmi les différents moyens connus de l'état de l'art (clippage, coopération de forme, etc.). Les deux coques forment globalement une sphère aplatie selon l'axe de révolution. Un aménagement est cependant prévu en périphérie des coques : celles-ci se raccordent à leur périphérie, le long d'une ligne externe de raccordement L, en formant une gorge de révolution 15, parallèle au plan de raccordement P, dans laquelle est inséré l'anneau viscoélastique 6. La gorge de révolution 15 permet ainsi de maintenir suffisamment l'anneau 6 pour nécessiter un effort d'extraction volontaire pour retirer celui-ci hors de la gorge 15. De plus, le diamètre intérieur de l'anneau viscoélastique 6 non monté est égal ou légèrement inférieur au diamètre délimité par le fond de la gorge 15 de manière à provoquer un léger serrage. L'anneau viscoélastique 6 est ainsi maintenu élastiquement contre le boîtier. L'anneau recouvre également la ligne externe de raccordement des deux coques : ceci permet d'éviter un démontage intempestif et protège dans le même temps cette ligne de raccordement des deux coques contre les infiltrations d'eau ou de saletés éventuelles.

La figure 3 représente la télécommande nomade 1 selon un deuxième plan de coupe YY' perpendiculaire au plan de la figure 1.

La télécommande nomade comprend un circuit électronique 7 supportant une pile primaire 8 et un transmetteur radiofréquences 9. Sur le circuit électronique 7 sont également montés un premier interrupteur 10, un deuxième interrupteur 11 et un troisième interrupteur 12 activables respectivement par les touches de commande 3, 4, 5. Une antenne imprimée 19 est également disposée sur le circuit électronique 7. Cette antenne est raccordée au transmetteur radiofréquences 9. Un connecteur USB 17 de type femelle est également disposé sur le circuit électronique et des bornes 18 de ce connecteur sont raccordées au circuit électronique. Les bornes sont disposées devant une ouverture 16 du boîtier, normalement masquée par l'anneau viscoélastique 6.

L'ouverture du boîtier peut être réalisée dans une des deux coques du boîtier ou être formée par une découpe débouchante dans l'une ou les deux coques.
Ainsi et comme représenté sur les figures, par ouverture du boîtier, on peut comprendre une zone du boîtier au niveau de laquelle les deux coques sont non jointives, c'est-à-dire une zone au niveau de laquelle la ligne de raccordement des deux coques s'interrompt ou se divise. Le raccordement des deux coques lui-même ne correspond donc pas à une ouverture au sens de la présente invention.

L'anneau viscoélastique 6 présente donc à la fois une fonction de protection de la télécommande nomade en cas de choc, mais aussi de protection du connecteur USB. De plus, l'anneau permet une personnalisation facile de plusieurs télécommandes nomades, simplement par un choix de couleurs de chaque anneau. La mise en place de l'anneau est facilitée par la forme de révolution du boîtier de la télécommande nomade.

La figure 4 représente une vue partielle en coupe d'une première variante 100 de la télécommande nomade 1, selon une coupe analogue à celle de la figure 2. Dans cette variante, une deuxième coque supérieure 113 et une deuxième coque inférieure 114 ont une forme globalement cylindrique et se raccordent sensiblement au niveau d'une surface génératrice du cylindre, en ménageant cependant une gorge de révolution 115. Le raccordement a lieu selon un plan de raccordement P', perpendiculaire à l'axe de révolution. La gorge de révolution 115 peut être réalisée par un biseau sur chaque coque, permettant un démoulage simple des coques lors de leur fabrication. Dans le fond de la gorge de révolution 115 se trouve la ligne externe de raccordement L. Dans ce mode d'exécution, un anneau viscoélastique 106 présente une section sensiblement trapézoïdale, mais comprenant une protubérance 106a complémentaire de la gorge de révolution 115. La gorge de révolution 115 permet ainsi de maintenir suffisamment l'anneau 106 pour nécessiter un effort d'extraction volontaire pour insérer celui-ci ou le retirer hors de la gorge. Le diamètre intérieur de l'anneau viscoélastique non monté est de plus égal ou légèrement inférieur au diamètre délimité par le fond de la gorge 115 de manière à provoquer un léger serrage. L'anneau viscoélastique est ainsi maintenu élastiquement contre le boîtier formé par les deux coques.

La figure 5 représente une vue partielle en coupe d'une deuxième variante 200 de la télécommande nomade, selon une coupe analogue à celle de la figure 2. Dans cette variante, une troisième coque supérieure 213 et une troisième coque inférieure 214 ont une forme globalement cylindrique et se raccordent sensiblement au niveau d'une surface génératrice du cylindre, avec à leur périphérie extérieure la ligne externe de raccordement L. Les deux coques forment le boîtier. Cette fois, le raccordement a lieu selon un plan de raccordement P", perpendiculaire à l'axe de révolution, sans présence d'une gorge de révolution.

Un anneau viscoélastique 206 présente une section sensiblement concave sur le côté en contact avec le boîtier, tandis qu'il présente une section sensiblement convexe sur le côté extérieur au boîtier. De plus, la hauteur de l'anneau viscoélastique est suffisante pour présenter un recouvrement (206a, 206b) sur chacune des coques (213,214).

Dans le plan de raccordement, le diamètre intérieur de l'anneau viscoélastique non monté est légèrement inférieur au diamètre extérieur des coques de manière à provoquer un léger serrage. L'anneau viscoélastique est ainsi maintenu élastiquement contre le boîtier.

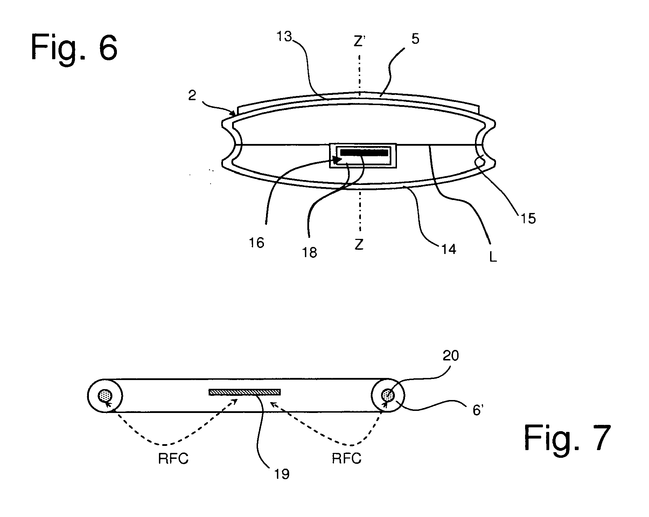

La figure 6 représente une vue du boîtier de la télécommande selon le point de vue schématisé par la flèche A de la figure 1, lorsque l'anneau 6 est retiré. Sur cette figure, l'ouverture 16 et les bornes 18 du connecteur 17 sont apparents. La ligne externe de raccordement entre les deux coques s'interrompt au niveau de l'ouverture 16, celle-ci étant délimitée par une découpe sur la coque inférieure du boîtier et par un bord de la coque supérieure.

La figure 7 représente schématiquement une coupe partielle de la télécommande munie d'un anneau spécifique 6' comprenant une antenne secondaire 20. Une antenne secondaire, par exemple telle que décrite dans le brevet FR 2 724 263 est réalisée par une spire ouverte, présentant à la fois une inductance et une capacité telles qu'elle résonne à la fréquence de l'onde porteuse du transmetteur radiofréquences. Avantageusement, l'antenne boucle est réalisée par un ressort spiral conducteur. Il existe alors un couplage magnétique RFC entre l'antenne imprimée 19 et l'antenne secondaire 20. De ce fait, la portée du transmetteur se trouve sensiblement accrue. L'utilisation d'un anneau spécifique plutôt qu'un anneau viscoélastique standard permet ainsi d'améliorer les performances de communication de la télécommande pour, par exemple, transformer en commande générale une commande locale.

## Revendications

1. Dispositif de commande (1, 100, 200) à distance d'équipements domotiques, de type nomade, comprenant un boîtier (2) dans lequel est logé un circuit électronique (7) comprenant un transmetteur radiofréquences (9), ledit boîtier (2) étant de forme sensiblement cylindrique ou sphérique et comprenant un axe de révolution, **caractérisé en ce que** le dispositif comprend un anneau viscoélastique (6, 106, 206), de même axe de révolution que celui dudit boîtier, maintenu élastiquement contre ledit boîtier (2) et masquant une ouverture (16) dudit boîtier (2).

2. Dispositif de commande selon la revendication 1, **caractérisé en ce que** ladite ouverture (16) donne accès aux bornes (18) d'un connecteur (17) raccordé audit circuit électronique (7).

3. Dispositif de commande selon l'une des revendications précédentes, **caractérisé en ce que** ledit boîtier (2) comprend une coque supérieure (13, 113, 213) et une coque inférieure (14, 114, 214) raccordées selon un plan de raccordement (P, P', P") perpendiculaire à l'axe de révolution et des touches de commande (3, 4, 5) disposées sur ladite coque supérieure (13, 113, 213).

4. Dispositif de commande selon l'une des revendications précédentes, **caractérisé en ce que** ledit anneau viscoélastique (6, 106) est maintenu dans une gorge de révolution (15,115) dudit boîtier (2).

5. Dispositif de commande selon la revendication 4, **caractérisé en ce que** ledit anneau viscoélastique (106) présente une section comprenant une protubérance (106a) complémentaire de ladite gorge de révolution (115).

6. Dispositif de commande selon la revendication 4, **caractérisé en ce que** ladite gorge de révolution (15,115) est située de part et d'autre dudit plan de raccordement (P, P').

7. Dispositif de commande selon l'une des revendications précédentes, **caractérisé en ce que** le diamètre extérieur (D1) dudit anneau viscoélastique (6, 106, 206) est supérieur au diamètre extérieur (D2) dudit boîtier (2).

8. Dispositif de commande selon l'une des revendications 1 ou 2, **caractérisé en ce que** ledit anneau viscoélastique (206) présente une section en forme de U recouvrant la zone de jonction entre ladite coque supérieure (213) et ladite coque inférieure (214).

9. Dispositif de télécommande selon l'une des revendications précédentes, **caractérisé en ce que** ledit circuit électronique (7) comprend une antenne imprimée (19) et **en ce que** ledit anneau viscoélastique (6, 106, 206) comprend au moins une portion de spire conductrice (20), constituant une antenne secondaire et couplée magnétiquement (RFC) avec ladite antenne imprimée (19).

## Claims

1. A remote control device (1, 100, 200) for home automation equipment, of the roaming type, comprising a housing (2) containing an electronic circuit (7) comprising a radiofrequency transmitter (9), said housing (2) being of substantially cylindrical or spherical shape and having an axis of revolution, **characterized in that** the device comprises a viscoelastic ring (6, 106, 206), with the same axis of revolution as that of said housing, held elastically against said housing (2) and concealing an opening (16) in said housing (2).

2. The control device as claimed in claim 1, **characterized in that** said opening (16) gives access to the terminals (18) of a connector (17) connected to said electronic circuit (7).

3. The control device as claimed in one of the preceding claims, **characterized in that** said housing (2) comprises a top shell (13, 113, 213) and a bottom shell (14, 114, 214) connected along a connection plane (P, P', P") perpendicular to the axis of revolution and control keys (3, 4, 5) positioned on said top shell (13, 113, 213).

4. The control device as claimed in one of the preceding claims, **characterized in that** said viscoelastic ring (6, 106) is held in a groove of revolution (15, 115) of said housing (2).

5. The control device as claimed in claim 4, **characterized in that** said viscoelastic ring (106) has a section including a protuberance (106a) complementing said groove of revolution (115).

6. The control device as claimed in claim 4, **characterized in that** said groove of revolution (15, 115) is located on either side of said connection plane (P, P').

7. The control device as claimed in one of the preceding claims, **characterized in that** the outer diameter (D1) of said viscoelastic ring (6, 106, 206) is greater than the outer diameter (D2) of said housing (2).

8. The control device as claimed in one of the claims 1 or 2, **characterized in that** said viscoelastic ring (206) has a U-shaped section covering the area of join between said top shell (213) and said bottom shell (214).

9. The remote control device as claimed in one of the preceding claims, **characterized in that** said electronic circuit (7) comprises a printed antenna (19) and wherein said viscoelastic ring (6, 106, 206) comprises at least one conductive turn portion (20), constituting a secondary antenna magnetically coupled (RFC) with said printed antenna (19).

## Patentansprüche

1. Vorrichtung zur Fernsteuerung (1, 100, 200) von Domotik-Geräten vom mobilen Typ, die ein Gehäuse (2) enthält, in dem eine einen Funkfrequenztransmitter (9) enthaltende elektronische Schaltung (7) untergebracht ist, wobei das Gehäuse (2) eine im Wesentlichen zylindrische oder kugelige Form hat und eine Drehachse enthält, **dadurch gekennzeichnet, dass** die Vorrichtung einen viskoelastischen Ring (6, 106, 206) gleicher Drehachse wie diejenige des Gehäuses enthält, der elastisch gegen das Gehäuse (2) gehalten wird und eine Öffnung (16) des Gehäuses (2) verdeckt.

2. Steuervorrichtung nach Anspruch 1, **dadurch gekennzeichnet, dass** die Öffnung (16) den Zugriff auf die Klemmen (18) eines Verbinders (17) erlaubt, der an die elektronische Schaltung (7) angeschlossen ist.

3. Steuervorrichtung nach einem der vorhergehenden Ansprüche, **dadurch gekennzeichnet, dass** das Gehäuse (2) eine obere Schale (13, 113, 213) und eine untere Schale (14, 114, 214), die gemäß einer Verbindungsebene (P, P', P") lotrecht zur Drehachse verbunden sind, und Steuertasten (3, 4, 5) enthält, die auf der oberen Schale (13, 113, 213) angeordnet sind.

4. Steuervorrichtung nach einem der vorhergehenden Ansprüche, **dadurch gekennzeichnet, dass** der viskoelastische Ring (6, 106) in einer drehsymmetrischen Rille (15, 115) des Gehäuses (2) gehalten wird.

5. Steuervorrichtung nach Anspruch 4, **dadurch gekennzeichnet, dass** der viskoelastische Ring (106) einen Querschnitt aufweist, der einen zur drehsymmetrischen Rille (115) komplementären Vorsprung (106a) enthält.

6. Steuervorrichtung nach Anspruch 4, **dadurch gekennzeichnet, dass** die drehsymmetrische Rille (15, 115) sich zu beiden Seiten der Anschlussebene (P, P') befindet.

7. Steuervorrichtung nach einem der vorhergehenden Ansprüche, **dadurch gekennzeichnet, dass** der Außendurchmesser (D1) des viskoelastischen Rings (6, 106, 206) größer als der Außendurchmesser (D2) des Gehäuses (2) ist.

8. Steuervorrichtung nach einem der Ansprüche 1 oder 2, **dadurch gekennzeichnet, dass** der viskoelastische Ring (206) einen U-förmigen Querschnitt hat, der die Verbindungszone zwischen der oberen Schale (213) und der unteren Schale (214) bedeckt.

9. Fernsteuerungsvorrichtung nach einem der vorhergehenden Ansprüche, **dadurch gekennzeichnet, dass** die elektronische Schaltung (7) eine gedruckte Antenne (19) enthält, und dass der viskoelastische Ring (6, 106, 206) mindestens einen leitenden Windungsabschnitt (20) enthält, der eine Sekundärantenne bildet und magnetisch (RFC) mit der gedruckten Antenne (19) gekoppelt ist.
